# EUROPEAN PATENT SPECIFICATION

(11) **EP 3 689 723 B1**
(45) Date of publication and mention of the grant of the patent: **09.08.2023**
(21) Application number: 18863274.9
(22) Date of filing: 05.07.2018
(51) Int. Cl.: B62J 6/00, B60Q 1/56, B62J 6/04

(54) **LICENSE PLATE LIGHT**
KENNZEICHENLEUCHTE
FEU D'ÉCLAIRAGE DE PLAQUE D'IMMATRICULATION

(30) Priority: 29.09.2017 JP 2017192196
(43) Date of publication of application: 05.08.2020
(73) Proprietor: Honda Motor Co., Ltd., Tokyo 107-8556 (JP)
(72) Inventor: HIRAMATSU Akito, Wako-shi Saitama 351-0193 (JP)
(74) Representative: Kiwit, Benedikt
(86) International application number: PCT/JP2018/025451
(87) International publication number: WO 2019/064794

(56) References cited:
- EP-A1- 2 397 366
- EP-A1- 2 455 279
- EP-A1- 2 557 025
- EP-A1- 3 050 786
- GB-A- 2 322 932
- JP-A- H08 268 359
- JP-A- 2013 154 657
- JP-A- 2013 203 228
- US-B1- 6 533 445

## Description

### Technical Field

The present invention relates to a license plate light (license light) for irradiating a license plate of a vehicle.

### Background Art

JP 2008 - 126 708 A discloses that along with a license plate being attached to a rear fender of a vehicle rear section, a taillight is disposed above the license plate in the vehicle rear section, and a license plate light irradiating the license plate is integrally disposed in the taillight.

EP 2 455 279 A1 discloses a motorcycle including a rear unit behind a body cover, the rear unit including a license plate bracket, a tail light and a license light. The license plate bracket is attached to an upper portion of a first back cover. The tail light is attached to an upper portion of the license plate bracket. The license light is attached to the license plate bracket, below the tail light.

EP 2 397 366 A1 discloses a motorcycle taillight including a base, a light source unit, and a hood. The base includes a first bulb seat, which receives a primary light source of a light source unit mounted therein. An extension section extends from an underside of the first bulb seat in a direction toward the rear side of the motorcycle. The extension section has an underside to which a second bulb seat is mounted. The second bulb seat is located at a free end of the extension section to receive a license plate light of the light source unit mounted therein. The hood has a shielding section corresponding in position to the second bulb seat of the base. A cover is arranged under the shielding section. EP 2 557 025 A1 discloses a back part structure of a body in a saddle-like type vehicle, in which a license lamp can be efficiently installed on a tail end fender extending downward from the back part of the body.

EP 3 050 786 A1 discloses a two-wheeled motor vehicle with left and right side body covers mounted to left and right seat rails so as to cover the sides of the vehicle body and so as to sandwich a tail light unit.

Furthermore,GB2322932 discloses a license plate light for irradiating a license plate attached to a lower side of a rear section of a vehicle, the vehicle having a taillight disposed on an upper side of the rear section of the vehicle, the license plate light further being configured to be disposed between the taillight and the license plate in the rear section of the vehicle, configured to be suspended downwardly from a bottom surface of the taillight, and configured to irradiate the license plate, wherein the license plate light is provided separately from the taillight and is disposed between the taillight and the license plate in a manner so as to be disposed obliquely above and rearward of the license plate in side view, the license plate light includes: a housing, which is configured to be suspended downwardly from a bottom surface of the taillight, the housing including a front surface, a bottom surface, and a rear surface on an opposite side to the front surface;a light source housed in the housing; and a lamplight surface, which is provided from the bottom surface to the front surface of the housing and which is configured to irradiate the license plate from the front surface and the bottom surface by transmitting a light emitted from the light source.

### Summary of Invention

Due to the license plate light being integrally disposed in the taillight, the license plate light can be easily arranged in the vehicle rear section, and it becomes easier for the license plate to be irradiated from the license plate light. However, there is a problem that in such a configuration, a structure of the taillight becomes complicated. Moreover, there is a problem that by there being adopted a structure that renders variable the likes of an irradiating position and an irradiating angle of the license plate light with respect to the license plate, the structure becomes even more complicated.

Accordingly, the present invention has an object of providing a license plate light by which a license plate can be irradiated by a simpler structure.

The invention is set out in the appended set of claims.

First Feature: The present invention is a license plate light for irradiating a license plate attached to a lower side of a rear section of a vehicle, the vehicle having a taillight disposed on an upper side of the rear section of the vehicle, the license plate light further being configured to be disposed between the taillight and the license plate in the rear section of the vehicle, configured to be suspended downwardly from a bottom surface of the taillight, and configured to irradiate the license plate, and further has the following features. The license plate light is provided separately from the taillight and is disposed between the taillight and the license plate in a manner so as to be disposed obliquely above and rearward of the license plate in side view. Also, the license plate light includes: a housing, which is configured to be suspended downwardly from a bottom surface of the taillight, the housing including a front surface, a bottom surface, and a rear surface on an opposite side to the front surface; and a lamplight surface, which is provided from the bottom surface to the front surface of the housing and which is configured to irradiate the license plate from the front surface and the bottom surface by transmitting a light emitted from the light source, and the light source is provided more rearward than a first vertical line passing through a front end of the license plate and a second vertical line passing through a rear end of the license plate.

Second Feature: The license plate light is configured to be suspended downwardly from a rear end of the taillight along a front-rear direction of the vehicle.

Third not claimed Feature: At least a part of the license plate light is configured to be provided in a range between: a vertical line passing through a front end of the license plate along a front-rear direction of the vehicle, when the license plate is attached to the lower side of the rear section of a vehicle; and a vertical line passing through a rear end of the license plate along the front-rear direction, when the license plate is attached to the lower side of the rear section of a vehicle.

Fourth not claimed Feature: At least a part of the license plate light is configured to be positioned more rearwardly than a rear end of the license plate is along a front-rear direction of the vehicle, when the license plate is attached to the lower side of the rear section of a vehicle.

Fifth not claimed Feature: A rear end of the license plate light is configured to be positioned more rearwardly than the rear end of the license plate, when the license plate is attached to the lower side of the rear section of a vehicle.

Sixth Feature: A reflector is arranged on a rear wall of the housing.

Seventh Feature: The license plate light is configured to be fixed to the bottom surface of the taillight.

Eighth Feature: The license plate light is configured to be supported by a vehicle body configuring the vehicle, via a stay extending out rearwardly from the vehicle body.

Due to the first feature of the present invention, the license plate light, which is separate from the taillight, is positioned on the bottom surface of the taillight, hence the license plate light can be disposed close to a rear end of the vehicle. Moreover, by the license plate light being suspended downwardly from the bottom surface of the taillight, a distance between the license plate light and the license plate becomes closer. As a result, the license plate is easily illuminated and can be brightly irradiated, and it becomes easier for visibility of the license plate light to be secured. Hence, in the first feature, the license plate light can radiate light by a simpler structure. Further, because the lamplight surface and the license plate are opposed without the lamplight surface being exposed to rearward of the vehicle, it becomes easier for the license plate to be illuminated from the lamplight surface.

Due to the second feature of the present invention, it becomes possible for the license plate light to be arranged in a position opposing the license plate, and it becomes easier for an irradiating angle of the license plate light onto the license plate to be secured.

Due to the third not claimed feature of the present invention, the license plate light can be disposed in a position where the license plate is easily illuminated.

Due to the fourth not claimed feature of the present invention, it becomes easier for the license plate light and the license plate to oppose each other.

Due to the fifth not claimed feature of the present invention, it becomes even easier for an irradiating angle of the license plate light onto the license plate to be secured.

Due to the sixth feature of the present invention, the rear wall of the housing can be effectively utilized as an arrangement place of the reflector.

Due to the seventh feature of the present invention, the license plate light can be reliably fixed to the vehicle body of the vehicle via the taillight.

Due to the eighth feature of the present invention, the license plate light can be reliably fixed to the vehicle body of the vehicle via the stay.

### Brief Description of Drawings

FIG. 1 is a left side view of a motorcycle in which a license plate light is installed;
FIG. 2 is a partial rear view of a rear section of the motorcycle including the license plate light of FIG. 1;
FIG. 3 is a right side view of the rear section of the motorcycle of FIG. 2;
FIG. 4 is a front view of the license plate light of FIGS. 1 to 3 seen from a rear fender side;
FIG. 5 is a bottom view of the license plate light and a taillight of FIGS. 1 to 4 seen from a license plate side;
FIG. 6 is a right side view showing a license plate light according to the present invention;
FIG. 7 is a right side view showing an example of a license plate light; and
FIG. 8 is a right side view showing a modified license plate light.

### Description of Embodiments

A preferred embodiment of a license plate light according to the present invention will be presented and described in detail below with reference to the accompanying drawings.

### [General Configuration of Motorcycle 12]

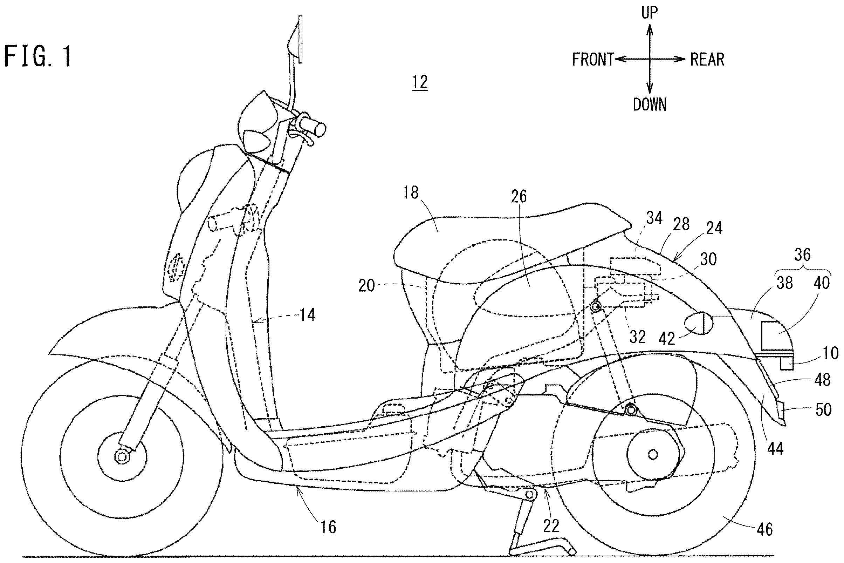

FIG. 1 is a left side view of a motorcycle (a vehicle) 12 being a kind of saddle-type vehicle in which a license plate light 10 according to the present embodiment is installed. The motorcycle 12 includes: a vehicle body frame 14; and a resin-made vehicle body cover 16 that covers the vehicle body frame 14. Note that although in the description below, a scooter type motorcycle 12 will be described as an example, the license plate light 10 according to the present embodiment is applicable also to various kinds of saddle-type vehicles such as a cub type, an on-road type, or an off-road type, or to another kind of vehicle besides a saddle-type vehicle. Moreover, in the description below, directions of front-rear, left-right, and up-down will be described according to directions observed by an occupant seated in a seat 18.

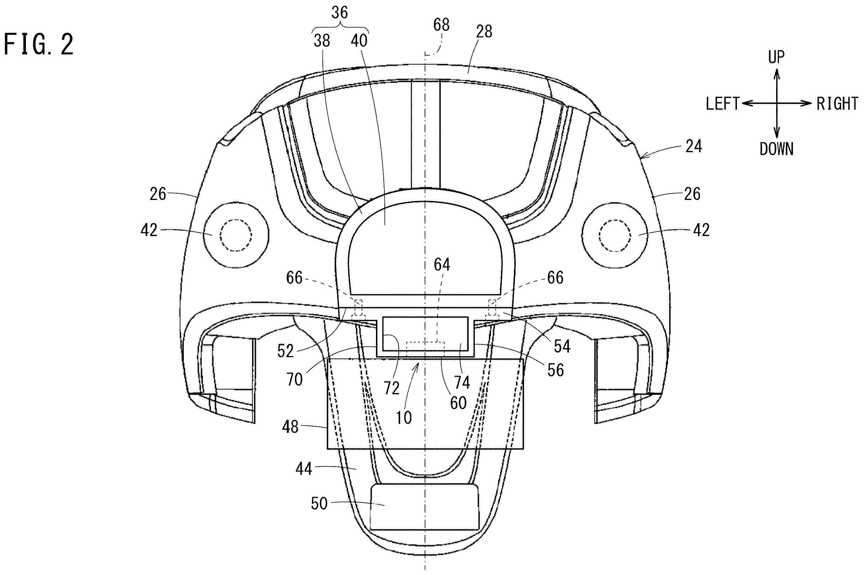

The vehicle body cover 16 covers the vehicle body frame 14, a storage box 20 directly under the seat 18, and a unit swing engine 22 disposed below the storage box 20. As shown in FIGS. 1 and 2, a rear section vehicle body cover (a vehicle body) 24 provided in a rear section of the motorcycle 12, of the vehicle body cover 16 includes: left and right rear side covers 26; and a rear center cover 28. The left and right rear side covers 26 cover the storage box 20 and a rear section of the vehicle body frame 14 from left and right. The rear center cover 28 covers rear end sections of a radiator reserve tank 30, a battery 32, a control unit 34, and a the vehicle body frame 14 from behind.

A taillight 36 is attached projecting rearwardly, to a rear section center of the rear section vehicle body cover 24. The taillight 36 has a substantially quadrant shape in side view of FIG. 1. The taillight 36 includes: a housing 38 which is attached to the rear section vehicle body cover 24; and a lens 40 which is fitted into an opening formed in a rear section of the housing 38. The taillight 36 irradiates a rearward area, via the lens 40, with a light that has been emitted from an unillustrated light source housed in the housing 38, as an irradiation light.

A rear section blinker 42 is attached to each of the left and right rear side covers 26.

A downwardly extending rear fender 44 is provided below the taillight 36 in the rear section center of the rear section vehicle body cover 24. The rear fender 44 covers a rear wheel 46 from obliquely above its rear side, below the taillight 36. A license plate (a number plate) 48 and a reflecting plate 50 are immovably attached to a rear surface of the rear fender 44.

Note that a structure of the motorcycle 12 is well-known, hence a detailed description thereof will be omitted.

### [Configuration of License plate light 10]

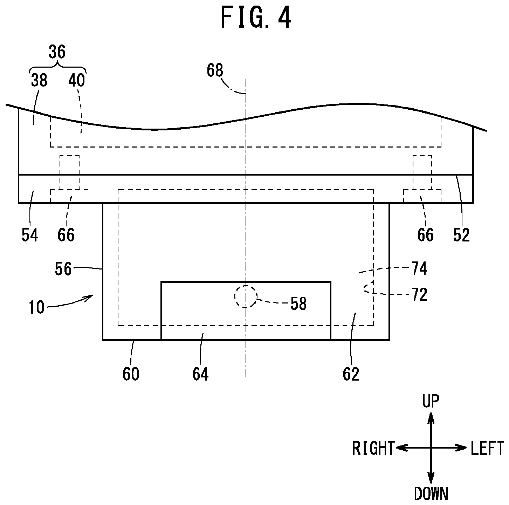

Next, the license plate light 10 will be described with reference to FIGS. 1 to 5.

The license plate light 10, which is a lighting device for irradiating the license plate 48, is provided separately from the taillight 36. That is, the license plate light 10 is attached to a rear end of a bottom surface 52 of the taillight 36, so as to be suspended downwardly from the bottom surface 52 of the taillight 36. Hence, the license plate light 10 is disposed between the taillight 36 and the license plate 48 in the rear section of the motorcycle 12.

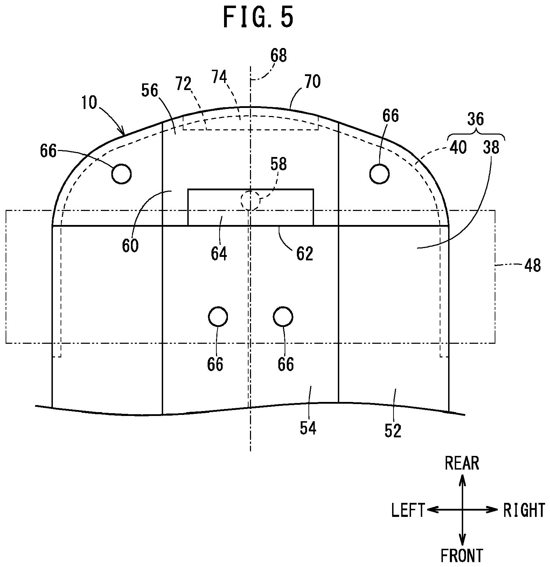

The license plate light 10 includes: a base section 54 which is disposed on the bottom surface 52 of the taillight 36 and is substantially T-shaped in bottom view of FIG. 5; a housing 56 which is suspended downwardly from the base section 54; a light source 58, such as an LED, which is housed in the housing 56; and a lamplight surface 64, such as a lens, which is provided from a bottom surface 60 to a front surface 62 of the housing 56, and which, by transmitting a light emitted from the light source 58, irradiates the license plate 48.

As shown in FIGS. 2 to 5, a plurality of places other than a portion where the housing 56 is provided in the base section 54 are attached to the bottom surface 52 of the housing 38 of the taillight 36 by fastening members 66, such as screws. As a result, the license plate light 10 is fixed to the bottom surface 52 of the taillight 36.

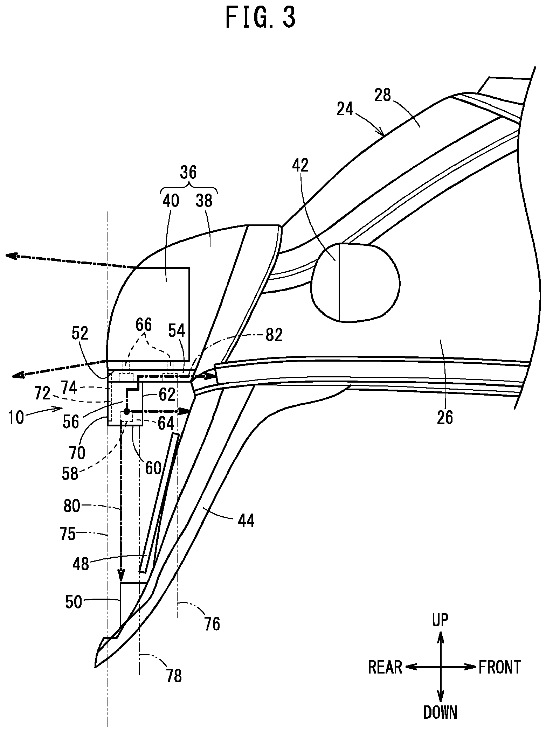

The housing 56 is a block (a box body) of rectangular shape extending downwardly from a bottom surface of the base section 54 so as to be substantially coaxial with a center of the taillight 36 (a vehicle body central axis 68 of the motorcycle 12). As shown in FIGS. 2 to 5, in the housing 56, a rear surface (a rear wall, a rear end) 70 on an opposite side to the front surface 62 where the lamplight surface 64 is provided, has a recess 72 formed therein, and a reflector 74 is arranged in this recess 72. Moreover, as shown in FIGS. 3 and 5, a rear end of the license plate light 10 (the rear surface 70 of the housing 56) is positioned more rearwardly than a rear end of the license plate 48 is. That is, a vertical line 75 passing through the rear surface 70 of the housing 56 along a front-rear direction of the motorcycle 12 is positioned more rearwardly than a vertical line 78 passing through the rear end of the license plate 48 along the front-rear direction of the motorcycle 12.

The lamplight surface 64 is a lens of L-shaped cross section provided from the bottom surface 60 to the front surface 62 of the housing 56, so as to oppose the license plate 48 and pass through the vehicle body central axis 68. As shown in FIG. 3, it is adequate that at least a part of the license plate light 10, specifically, a part of the lamplight surface 64 is provided in a range between: a vertical line 76 passing through a front end of the license plate 48 along the front-rear direction of the motorcycle 12; and the vertical line 78 passing through the rear end of the license plate 48. As a result, when the license plate 48 is irradiated with the light that has been emitted from the light source 58 as an irradiation light 80 from the lamplight surface 64, the whole of the license plate 48 can be brightly illuminated. Note that, as shown in FIGS. 3 and 5, the light source 58 is connected to the control unit 34 and the battery 32 of the motorcycle 12 (refer to FIG. 1), via a plurality of wirings 82. The light source 58 emits the light based on a control signal from the control unit 34, in a state of being supplied with electric power from the battery 32.

### [Modified Examples of License plate light 10]

The license plate light 10 according to the present embodiment, which is configured as above, may also be altered as below.

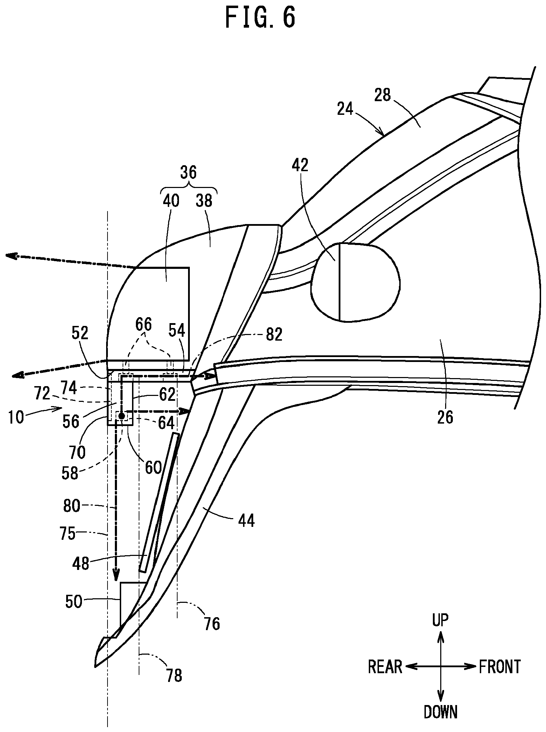

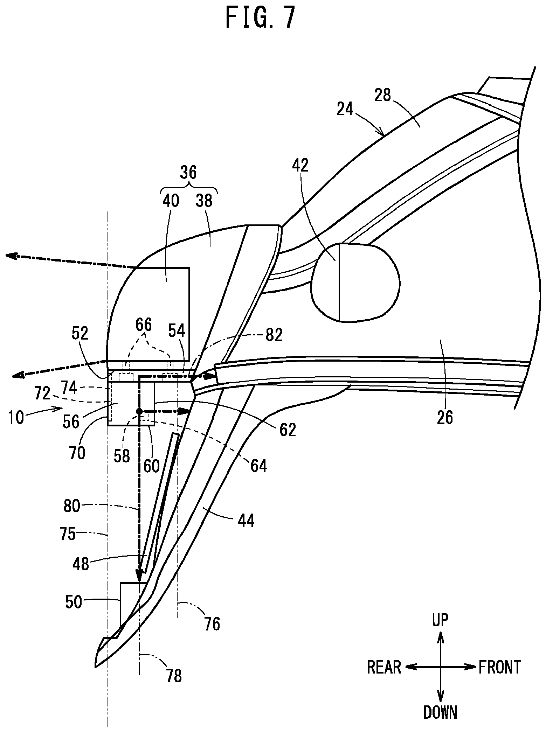

According to the invention, shown in FIG. 6, the license plate light 10 is configured in such a manner that the lamplight surface 64 is provided more rearwardly than the range between each of the vertical lines 76, 78 passing through the front end and the rear end of the license plate 48. Moreover, in the further example of FIG. 7 (example not encompassed by the claims), the license plate light 10 is configured in such a manner that the lamplight surface 64 is provided in the range between each of the vertical lines 76, 78 passing through the front end and the rear end of the license plate 48. In both of the modified examples, the whole of the license plate 48 can be irradiated with the light that has been emitted from the light source 58, as the irradiation light 80 from the lamplight surface 64, and the whole of the license plate 48 can be brightly illuminated. In short, it is adequate that the license plate 48 is positioned within a range of the irradiation light 80 radiated from the lamplight surface 64.

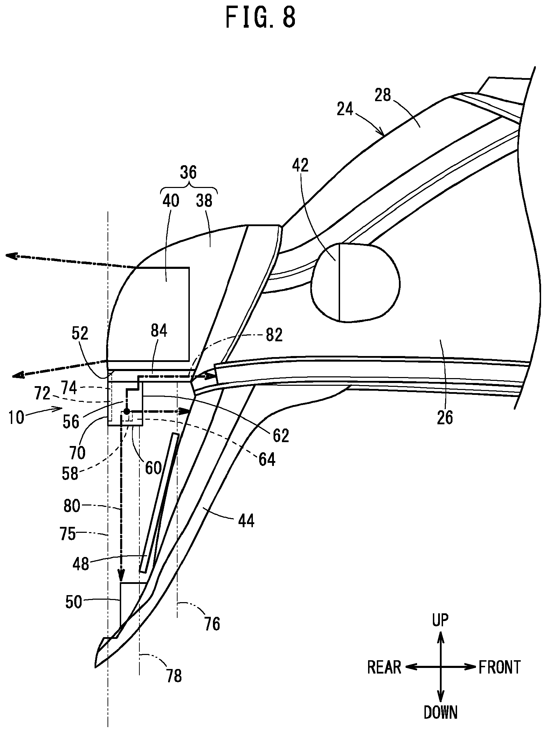

Furthermore, the license plate light 10 may have its configuration altered to that of FIG. 8, instead of the configurations of FIGS. 1 to 6. The modified example of FIG. 8 illustrates the case where, instead of the housing 56 being fixed to the base section 54 (refer to FIGS. 2 to 6), the housing 56 is fixed to a stay 84 extending out rearwardly from below an attaching place of the taillight 36 in the rear section vehicle body cover 24. In this case, the stay 84 extends out rearwardly from the rear section vehicle body cover 24, so as to be in close contact with the bottom surface 52 of the taillight 36. Hence, the housing 56 is attached to the stay 84 so as to be suspended downwardly from the rear end of the bottom surface 52 of the taillight 36 via the stay 84. In this modified example too, the license plate light 10 can be supported by the rear section vehicle body cover 24 in the rear section of the motorcycle 12.

### [Advantages of Present Embodiment]

Advantages of the above-described license plate light 10 according to the present embodiment will be described.

The license plate light 10, which is separate from the taillight 36, is positioned on the bottom surface 52 of the taillight 36. It thus becomes possible for the license plate light 10 to be disposed close to the rear end of the motorcycle 12. Moreover, by the license plate light 10 being suspended downwardly from the bottom surface 52 of the taillight 36, a distance between the license plate light 10 and the license plate 48 becomes closer. As a result, the license plate 48 is easily illuminated and can be brightly irradiated, and it becomes easier for visibility of the license plate light 10 to be secured. Hence, the license plate light 10 according to the present embodiment can radiate light by a simpler structure.

Moreover, since the license plate light 10 is suspended downwardly from the rear end of the taillight 36, it becomes possible for the license plate light 10 to be arranged in a position opposing the license plate 48. As a result, it becomes easier for an irradiating angle of the license plate light 10 onto the license plate 48 to be secured.

Provided, but not claimed, at least a part of the license plate light 10 is provided in the range between: the vertical line 76 passing through the front end of the license plate 48; and the vertical line 78 passing through the rear end of the license plate 48, the license plate light 10 can be disposed in a position where the license plate 48 is easily illuminated.

According to the invention, when the license plate light 10 is positioned more rearwardly than the rear end of the license plate 48 is, the license plate light 10 can be disposed in a position where the license plate 48 is easily illuminated, due to it becoming easier for the license plate light 10 and the license plate 48 to oppose each other.

In addition, as shown in FIGS. 3 and 5 to 8, the rear end of the license plate light 10 (the rear surface 70 of the housing 56) is positioned more rearwardly than the rear end of the license plate 48 is. As a result, it becomes even easier for an irradiating angle of the license plate light 10 onto the license plate 48 to be secured.

Further still, the lamplight surface 64 is provided from the bottom surface 60 to the front surface 62 of the housing 56, and the lamplight surface 64 irradiates the license plate 48. Hence, the lamplight surface 64 and the license plate 48 can be opposed without the lamplight surface 64 being exposed to rearward of the motorcycle 12. As a result, it becomes easier for the license plate 48 to be illuminated from the lamplight surface 64.

Moreover, the rear surface 70 of the housing 56 can be effectively utilized as an arrangement place of the reflector 74.

Furthermore, the license plate light 10 can be reliably fixed to the rear section vehicle body cover 24 of the motorcycle 12 via the taillight 36.

Alternatively, the license plate light 10 can be reliably fixed to the rear section vehicle body cover 24 of the motorcycle 12 via the stay 84.

That concludes description of the present invention using the preferred embodiment. However, the technical range of the present invention is not limited to the range mentioned in the above-described embodiment. Moreover, the symbols in parentheses mentioned in the claims have been assigned in accordance with the symbols in the accompanying drawings in order to facilitate understanding of the present invention, and the present invention should not be interpreted as being limited to elements assigned with those symbols.

## Claims

1. A license plate light (10) for irradiating a license plate (48) attached to a lower side of a rear section of a vehicle (12), the vehicle (12) having a taillight (36) disposed on an upper side of the rear section of the vehicle (12),
the license plate light (10) further being configured to be disposed between the taillight (36) and the license plate (48) in the rear section of the vehicle (12), configured to be suspended downwardly from a bottom surface (52) of the taillight (36), and configured to irradiate the license plate (48),
wherein
the license plate light (10) is provided separately from the taillight (36) and is disposed between the taillight (36) and the license plate (48) in a manner so as to be disposed obliquely above and rearward of the license plate (48) in side view,
the license plate light (10) includes:
a housing (56), which is configured to be suspended downwardly from the bottom surface (52) of the taillight (36), the housing (56) including a front surface (62), a bottom surface (60), and a rear surface (70) on an opposite side to the front surface (62);
a light source (58) housed in the housing (56); and
a lamplight surface (64), which is provided from the bottom surface (60) to the front surface (62) of the housing (56) and which is configured to irradiate the license plate (48) from the front surface (62) and the bottom surface (60) by transmitting a light emitted from the light source (58), and
the light source (58) is provided more rearward than a first vertical line (76) passing through a front end of the license plate (48) and a second vertical line (78) passing through a rear end of the license plate (48).

2. The license plate light (10) according to claim 1, wherein the license plate light (10) is configured to be suspended downwardly from a rear end of the taillight (36) along a front-rear direction of the vehicle (12).

3. The license plate light (10) according to any one of claims 1 to 2, wherein a reflector (74) is arranged on a rear wall (70) of the housing (56).

4. The license plate light (10) according to any one of claims 1 to 3, wherein the license plate light (10) is configured to be fixed to the bottom surface (52) of the taillight (36).

5. The license plate light (10) according to any of claims 1 to 3 wherein the license plate light (10) is configured to be supported by a vehicle body (24) configuring the vehicle (12), via a stay (84) extending out rearwardly from the vehicle body (24).

## Patentansprüche

1. Kennzeichenleuchte (10), um ein Kennzeichenschild (48), das an einer unteren Seite eines hinteren Abschnitts eines Fahrzeugs (12) angebracht ist, zu beleuchten, wobei das Fahrzeug (12) ein Rücklicht (36) hat, das an einer Oberseite des hinteren Abschnitts des Fahrzeugs (12) angeordnet ist,
wobei die Kennzeichenleuchte (10) weiterhin ausgestaltet ist, zwischen dem Rücklicht (36) und dem Kennzeichenschild (48) im hinteren Abschnitt des Fahrzeugs (12) angeordnet zu sein, ausgestaltet ist, von einer Bodenfläche (52) des Rücklichts (36) nach unten aufgehängt zu sein, und ausgestaltet ist, das Kennzeichenschild (48) zu beleuchten,
wobei die Kennzeichenleuchte (10) getrennt von dem Rücklicht (36) vorgesehen ist und zwischen dem Rücklicht (36) und dem Kennzeichenschild (48) in einer Weise angeordnet ist, um so schräg über und hinter dem Kennzeichenschild (48) in einer Seitenansicht angeordnet zu sein,
wobei die Kennzeichenleuchte (10) aufweist:
ein Gehäuse (56), das ausgestaltet ist, von der Bodenfläche (52) des Rücklichts (36) nach unten aufgehängt zu sein, das Gehäuse (56) eine Vorderfläche (62), eine Bodenfläche (60) und eine Rückfläche (70) an einer gegenüberliegenden Seite zu der Vorderfläche (62) aufweist;
eine im Gehäuse (56) aufgenommene Lichtquelle (58); und
eine Lampenlichtfläche (64), die von der Bodenfläche (60) zur Vorderfläche (62) des Gehäuses (56) vorgesehen ist, und die ausgestaltet ist, das Kennzeichenschild (48) von der Vorderfläche (62) und der Bodenfläche (60) zu beleuchten, indem ein von der Lichtquelle (58) ausgestrahltes Licht übertragen wird, und
die Lichtquelle (58) weiter hinten als eine erste vertikale Linie (76) vorgesehen ist, die durch ein vorderes Ende des Kennzeichenschilds (48) hindurchgeht, und eine zweite vertikale Linie (78), die durch ein hinteres Ende des Kennzeichenschilds (48) hindurchgeht.

2. Kennzeichenleuchte (10) nach Anspruch 1,
wobei die Kennzeichenleuchte (10) ausgestaltet ist, von einem hinteren Ende des Rücklichts (36) entlang einer Richtung des Fahrzeugs (12) nach vorne und hinten nach unten aufgehängt zu sein.

3. Kennzeichenleuchte (10) nach einem der Ansprüche 1 bis 2,
wobei ein Reflektor (74) an einer Rückwand (70) des Gehäuses (56) angeordnet ist.

4. Kennzeichenleuchte (10) nach einem der Ansprüche 1 bis 3,
wobei die Kennzeichenleuchte (10) ausgestaltet ist, an der Bodenfläche (52) der Rückleuchte (36) befestigt zu sein.

5. Kennzeichenleuchte (10) nach einem der Ansprüche 1 bis 3,
wobei die Kennzeichenleuchte (10) ausgestaltet ist, von einer das Fahrzeug (12) ausgestaltenden Fahrzeugkarosserie (24) über eine Strebe (84), die sich von der Fahrzeugkarosserie (24) heraus nach hinten erstreckt, gehalten zu werden.

## Revendications

1. Feu d'éclairage de plaque d'immatriculation (10) pour éclairer une plaque d'immatriculation (48) fixée à un côté inférieur d'une section arrière d'un véhicule (12), le véhicule (12) ayant un feu arrière (36) disposé sur un côté supérieur de la section arrière du véhicule (12),
le feu d'éclairage de plaque d'immatriculation (10) étant en outre configuré pour être disposé entre le feu arrière (36) et la plaque d'immatriculation (48) dans la section arrière du véhicule (12), configuré pour être suspendu vers le bas à partir d'une surface inférieure (52) du feu arrière (36), et configuré pour éclairer la plaque d'immatriculation (48),
dans lequel le feu d'éclairage de plaque d'immatriculation (10) est séparé du feu arrière (36) et est disposé entre le feu arrière (36) et la plaque d'immatriculation (48) de façon à être disposé de manière oblique au-dessus et en arrière de la plaque d'immatriculation (48) en vue de côté,
le feu d'éclairage de plaque d'immatriculation (10) comporte :
un boîtier (56), qui est configuré pour être suspendu vers le bas à partir de la surface inférieure (52) du feu arrière (36), le boîtier (56) comportant une surface avant (62), une surface inférieure (60), et une surface arrière (70) sur un côté opposé à la surface avant (62) ;
une source de lumière (58) logée dans le boîtier (56) ; et
une surface de lumière de lampe (64), qui est disposée de la surface inférieure (60) à la surface avant (62) du boîtier (56) et qui est configurée pour éclairer la plaque d'immatriculation (48) à partir de la surface avant (62) et la surface inférieure (60) en transmettant une lumière émise par la source de lumière (58), et
la source de lumière (58) est disposée plus vers l'arrière qu'une première ligne verticale (76) passant par une extrémité avant de la plaque d'immatriculation (48) et une deuxième ligne verticale (78) passant par une extrémité arrière de la plaque d'immatriculation (48).

2. Feu d'éclairage de plaque d'immatriculation (10) selon la revendication 1, dans lequel le feu d'éclairage de plaque d'immatriculation (10) est configuré pour être suspendu vers le bas à partir d'une extrémité arrière du feu arrière (36) le long d'une direction avant-arrière du véhicule (12).

3. Feu d'éclairage de plaque d'immatriculation (10) selon l'une quelconque des revendications 1 à 2, dans lequel un réflecteur (74) est agencé sur une paroi arrière (70) du boîtier (56).

4. Feu d'éclairage de plaque d'immatriculation (10) selon l'une quelconque des revendications 1 à 3, dans lequel le feu d'éclairage de plaque d'immatriculation (10) est configuré pour être fixé à la surface inférieure (52) du feu arrière (36).

5. Feu d'éclairage de plaque d'immatriculation (10) selon l'une quelconque des revendications 1 à 3, dans lequel le feu d'éclairage de plaque d'immatriculation (10) est configuré pour être supporté par une carrosserie de véhicule (24) configurant le véhicule (12), par le biais d'un étai (84) s'étendant vers l'arrière à partir de la carrosserie de véhicule (24).
